# EUROPÄISCHE PATENTSCHRIFT

(11) **EP 2 743 558 B1**
(45) Veröffentlichungstag und Bekanntmachung des Hinweises auf die Patenterteilung: **04.03.2020**
(21) Anmeldenummer: 13182583.8
(22) Anmeldetag: 02.09.2013
(51) Int. Cl.: F16L 41/14, F16L 27/04

(54) **Anschlusssystem zum Anschließen eines Rohres**
Connection system for connecting a pipe
Système de raccordement d'un tuyau

(30) Priorität: 14.09.2012 DE 202012103503 U
(43) Veröffentlichungstag der Anmeldung: 18.06.2014
(73) Patentinhaber: REHAU AG + Co, 95111 Rehau (DE)
(72) Erfinder: Sieber, Jürgen, 91074 Herzogenaurach (DE)

(56) Entgegenhaltungen:
- DE-A1- 19 756 025
- DE-A1- 19 927 591
- DE-A1-102009 011 360
- US-A- 6 089 615

## Beschreibung

Die Erfindung betrifft ein Anschlusssystem zum Anschließen eines Rohres, weiterhin betrifft die Erfindung ein Rohrsystem mit wenigstens einem derartigen Anschlusssystem.

Aus dem Stand der Technik sind Anschlusssysteme bekannt, die dazu dienen, ein Rohr an ein Hauptrohr anzuschließen, um damit beispielsweise Abwässer aus einem Haus in einen Sammelkanal einzuleiten. Solche Anschlusssysteme sind aus DE 197 56 025 A1, US 6 089 615 A und DE 199 27 591 A1 bekannt.

Ein wesentliches Problem hierbei ist die Dichtheit des Anschlusssystems, insbesondere am Übergang zwischen dem Hauptrohr und dem angeschlossenen Rohr.

Die Erfindung hat sich daher die Aufgabe gestellt, ein Anschlusssystem zum Anschließen eines Rohres an ein Hauptrohr zur Verfügung zu stellen, das eine verbesserte Dichtheit aufweist.

Diese Aufgabe wird durch ein Anschlusssystem mit den Merkmalen des Anspruches 1 gelöst.

Weiterhin wird die Aufgabe, ein Rohrsystem mit wenigstens einem solchen Anschlusssystem, durch Anspruch 9 gelöst.

Es ist vorgesehen, dass ein Anschlusssystem zum Anschließen eines Rohres an ein Hauptrohr, wobei das Anschlusssystem zu diesem Zweck mit dem Hauptrohr verbindbar ist, derart ausgebildet ist, dass ein elastisch verformbares Innenrohr vorgesehen ist, wobei das Innenrohr einen Endabschnitt mit wenigstens einer abgeknickten Lasche aufweist. Durch Zusammendrücken des elastisch verformbaren Innenrohres mit der Lasche voran lässt sich das Innenrohr durch eine Abzweigöffnung des Hauptrohres in dieses teilweise einschieben.

Es ist weiterhin vorgesehen, dass ein Haltering und ein Dichtelement vorgesehen sind, wobei der Haltering und das Dichtelement im Verbindungszustand auf das Innenrohr aufgeschoben sind.

Im Verbindungszustand drückt dabei das Dichtelement mit einer anliegenden Kontaktfläche wenigstens teilweise an eine Hauptrohr-Leibungsfläche, die die Abzweigöffnung begrenzt und diese umgibt und an eine Hauptrohr-Innenfläche, die die Abzweigöffnung umgrenzt.

Weiterhin ist ein Schraubelement bei dem Anschlusssystem vorgesehen, wobei das Schraubelement im Verbindungszustand auf das Innenrohr geschraubt ist und dabei den Haltering gegen eine Hauptrohr-Außenfläche drückt.

Als Hauptrohr wird im Erfindungszusammenhang ein Rohr relativ großen Durchmessers angesehen, das aus Beton, Steinzeug oder Stahlbeton besteht, eine relativ dicke Wandstärke aufweist und an das das Rohr anzuschließen ist.

Zu diesem Zweck wird eine Abzweigöffnung am Hauptrohr geschaffen, an der das Rohr mit Hilfe des erfindungsgemäßen Anschlusssystems anzuschließen ist.

Es kommt sehr häufig vor, dass solche Hauptrohre aufgrund ihres Alters oder aufgrund von im Laufe ihrer Lebenszeit eingetretenen Schäden saniert worden sind.

Eine solche Sanierung kann beispielsweise mittels eines Inliners stattfinden.

Ein solcher Inliner ist ein Rohr oder ein Schlauch, der beispielsweise unter Verringerung des Querschnitts in das Lumen des Hauptrohres eingebracht ist und dort dann seine ursprüngliche Größe wieder angenommen hat.

Hierbei legt sich der Inliner im Allgemeinen fest an die Innenwandung des Hauptrohres an.

Soweit mit Hilfe eines Anschlusssystems dann ein Rohr an das Hauptrohr angeschlossen werden soll, kommt es ganz besonders darauf an, dass an der Übergangsstelle Rohr / Hauptrohr die Dichtheit langfristig sichergestellt wird.

Ganz kritisch ist die Situation, wenn beispielsweise dort eine Undichtigkeit auftritt und Wasser hinter den Inliner, also in den Spalt zwischen der Innenoberfläche des Hauptrohres und der Außenoberfläche des Inliners, eindringt; man spricht hier von einer sogenannten Hinterläufigkeit.

Um dies sicher zu vermeiden, stellt die vorliegende Erfindung ein Anschlusssystem zur Verfügung, bei dem das Dichtelement derartig gestaltet ist, dass es im Verbindungszustand mit einer anliegenden Kontaktfläche wenigstens teilweise an eine Hauptrohr-Leibungsfläche und an eine Hauptrohr-Innenfläche drückt und dort fluiddicht den fluiddurchflossenen Raum abgrenzt.

Als Hauptrohr-Leibungsfläche wird die Fläche verstanden, die nach Anbringung der Abzweigöffnung in der Wandung des Hauptrohres entstanden ist und diese Abzweigöffnung begrenzt.

Als Hauptrohr-Innenfläche wird die Fläche verstanden, die die Innenoberfläche des Rohres bildet, entsprechend als Hauptrohr-Außenfläche die Außenoberfläche des Hauptrohres.

Erfindungsgemäß ist vorgesehen, dass die Lasche als in Abschnitten ausgebildeter Bund mit einem Gelenkabschnitt ausgebildet ist.

Der in Abschnitten ausgebildete Bund kann hierzu so gestaltet sein, dass die einzelnen kurzen Abschnitte zueinander etwa äquidistant beabstandet sind. Beim Einschieben des Innenrohres mit den Laschen, die als in Abschnitten ausgebildeter Bund ausgeführt ist, kann es sich günstigerweise ergeben, dass der in Abschnitten ausgebildete Bund durch die Gelenkabschnitte in eine für den Einschiebvorgang günstige Lage gebracht wird, so dass das Einschieben erleichtert ist.

Beim Einführen werden dazu die Laschen am Gelenkabschnitt abgewinkelt, bis das Innenrohr soweit in die Abzweigöffnung eingeführt ist, dass die Laschen zurückklappen können.

Dazu ist der Gelenkabschnitt derart gestaltet, dass die Laschen in eine stabile Lage zurückkehren, die der Einbausituation entspricht, sobald keine Kraft mehr auf die Laschen ausgeübt wird.

Nachdem das Innenrohr soweit eingeschoben ist, dass der in Abschnitten ausgebildete Bund in seine ursprüngliche Lage zurückgeschwenkt ist, kann die Montage des Anschlusssystems erfolgen, indem das Schraubelement auf das Innenrohr geschraubt wird.

Hierbei resultiert eine in ganz besonderem Maße fluiddichte Anordnung, indem eine besonders große Kontaktfläche des Dichtelements im Verbindungszustand an die Hauptrohr-Innenfläche drückt, was durch die Laschen, die in Abschnitten als Bund ausgebildet ist, ermöglicht wird.

Das Dichtelement wird durch eine konische Ausformung des Abschnitts des Innenrohres, der an die Lasche angrenzt und von dem Dichtelement umschlossen ist, im Verbindungszustand an die Hauptrohr-Leibungsfläche gedrückt und wirkt dort ebenfalls abdichtend. Die konische Ausformung ist dabei derart gestaltet, dass das Innenrohr in Richtung der Lasche sich in dem genannten Bereich kegelstumpfartig erweitert, so dass sich dort der Durchmesser des Innenrohres stetig erweitert.

Im Rahmen der vorliegenden Erfindung ist sehr vorteilhaft vorgesehen, dass das Schraubelement über ein an einer Außenfläche des Innenrohres ausgebildetes Gewinde auf das Innenrohr geschraubt ist.

Ein an der Außenfläche des Innenrohres ausgebildetes Gewinde ist leicht zugänglich, so dass das Schraubelement ohne großen Aufwand an dieser Stelle positionierbar ist und dann aufgeschraubt werden kann.
Auf diese Weise ist auch das Schraubelement leicht zugänglich, so dass das Aufschrauben selbst in einfacher Weise vorzunehmen ist.

In einer günstigen Fortbildung der Erfindung kann vorgesehen sein, dass das Dichtelement geführt und drehfest in Bezug auf das Innenrohr auf dieses aufschiebbar ist.

Da das Rohr und das Dichtelement wie auch das Innenrohr mit dem dort angeformten Bund zumindest in Teilen der Sattelform der Abzweigöffnung des Hauptrohres nachgebildet sind, ist eine Ausführung, bei der das Dichtelement geführt und drehfest in Bezug auf das Innenrohr auf dieses aufschiebbar ist, besonders günstig.
Hierdurch entfallen spätere langwierige und ggf. auch fehlerbehaftete Ausrichtmaßnahmen von Dichtelement und Innenrohr.

In einer weiteren sehr günstigen Ausführungsform der Erfindung ist vorgesehen, dass der Haltering geführt und drehfest in Bezug auf das Innenrohr auf dieses aufschiebbar ist.

Wie die vorstehend bereits beschriebene Sattelform der Abzweigöffnung des Hauptrohres, ist auch der Haltering entsprechend zu gestalten, so dass diese Sattelform am Haltering zumindest in Abschnitten aufgegriffen ist.
Von daher ist ein Haltering, der geführt und drehfest in Bezug auf das Innenrohr auf dieses aufschiebbar ist, besonders günstig, da nachträgliche aufwendige Ausrichtarbeiten vermieden werden können.

Als Mittel, um Dichtelement und / oder Haltering geführt und drehfest in Bezug auf das Innenrohr auf dieses aufzuschieben, bietet sich an, dass entsprechende Nuten, Stege oder Ähnliches an den einzelnen Bauteilen vorzusehen sind, die miteinander in Eingriff bringbar sind.

Im Rahmen der Erfindung hat es sich als ganz besonders günstig erwiesen, wenn das Innenrohr eine Skalierung aufweist, die den Aufschraubweg des Schraubelements anzeigt.

Mittels einer solchen Skalierung auf dem Innenrohr kann ohne weiteres von außen erkannt werden, wie weit das Schraubelement am Anschlusssystem aufgeschraubt ist, d. h. in welchem Ausmaß die Verpressung des Dichtelements, die die Dichtheit des Systems herstellt, stattgefunden hat.

Es ist damit einfach, für unterschiedliche Installationsbedingungen dann entsprechende Aufschraubwege für das Installationspersonal vorzugeben.

In einer weiteren vorteilhaften Ausgestaltung der vorliegenden Erfindung kann vorgesehen sein, dass das Dichtelement wenigstens einen Bereich aus einem quellfähigen Material aufweist, der im Verbindungszustand und nach Aufquellen vorzugsweise einen fluiddichten Kontakt zu der Hauptrohr-Leibungsfläche und / oder zu der Hauptrohr-Innenfläche herstellt.

Dichtelemente, die wenigstens einen Bereich aus einem quellfähigen Material aufweisen, sind deshalb bevorzugt, da bei einer Undichtigkeit Feuchtigkeit an den Bereich aus diesem quellfähigen Material gelangt, so dass dieses quellfähige Material dann unter Volumenvergrößerung aufquillt.
Hierbei entfaltet es seine Dichtwirkung.

In ganz bevorzugter Weise kann das Dichtelement im vorliegenden Erfindungszusammenhang dann wirken, wenn es im gequollenen Zustand einen Kontakt zu der Hauptrohr-Leibungsfläche und / oder zu der Hauptrohr-Innenfläche aufweist. Hierdurch wird die Dichtheit des erfindungsgemäßen Anschlusssystems in ganz besonderem Maße befördert.

In einer weiteren Ausführungsform der vorliegenden Erfindung kann vorteilhaft vorgesehen sein, dass auf der Außenfläche am Innenrohr ein markierter Ort, der bevorzugt eine Vertiefung ist, ausgebildet ist, der im Verbindungszustand in etwa in Höhe des Bereiches aus einem quellfähigen Material des Dichtelements ausgebildet ist, hinter dem ein Kanal angeordnet ist, in den nach Öffnung des markierten Ortes ein Mittel einbringbar ist.

Um sicherzugehen, dass eine fluiddichte Verbindung durch das erfindungsgemäße Anschlusssystem geschaffen wird, kann gemäß der vorliegend beschriebenen Ausbildung ein Material, wie beispielsweise ein Verpressharz oder ein verpressbares Dichtungsmittel oder ein Klebemittel oder Ähnliches, über den Kanal zu dem Bereich aus einem quellfähigen Material des Dichtelements geleitet werden.
Bei der Montage ist darauf zu achten, dass der im Dichtelement ausgebildete Kanal dann mit dem markierten Ort am Innenrohr in gleiche Position gebracht wird.
Dies kann bewerkstelligt werden, indem Dichtelement und Innenrohr lagefest zueinander montiert werden.

Um einen Raum vorzugeben, in dem sich das eingebrachte Mittel verteilt und seine Dichtwirkung entfaltet, ist vorteilhaft vorgesehen, dass der Bereich aus einem quellfähigen Material des Dichtelements derartig ausgebildet ist, dass hier noch Freiraum vorgesehen ist, in dem sich das einbringbare Mittel verteilen kann.

Hierzu kann beispielsweise der Bereich aus einem quellfähigen Material des Dichtelements so gestaltet sein, dass dort Ziehharmonikabalgen-artige Freiräume vorgesehen sind.

In einer Fortbildung der vorliegenden Erfindung kann vorgesehen sein, dass das Schraubelement aus zwei Abschnitten zusammensetzbar ausgeführt ist.

Ein solches aus zwei Abschnitten zusammensetzbar ausgeführtes Schraubelement lässt sich platzsparend lagern und transportieren und steht nach einem einfachen Zusammensetzvorgang sofort bereit, um auf das Innenrohr aufgeschraubt zu werden.

Ein Rohrsystem mit wenigstens einem Anschlusssystem, wie vorstehend beschrieben, ist besonders günstig, was die Dichtheit anbelangt.

Ebenso ist die Herstellung eines derartigen Rohrsystems mit wenigstens einem Anschlusssystem der vorgenannten Art in einfacher Art und Weise, schnell und kostengünstig sowie reproduzierbar ausführbar.

Die vorliegende Erfindung wird anhand der beigefügten Figuren wie folgt näher erläutert: Hierzu zeigt:
- Fig. 1: eine Querschnittansicht eines Anschlusssystems;
- Fig. 2: eine Querschnittansicht eines Anschlusssystems;
- Fig. 3: eine Querschnittansicht eines Teils des Anschlusssystems gemäß vorliegenderErfindung;
- Fig. 4: eine Aufsicht auf das Innenrohr;
- Fig. 5: eine Querschnittansicht eines Details des Anschlusssystems;
- Fig. 6: eine Aufsicht auf das Schraubelement.

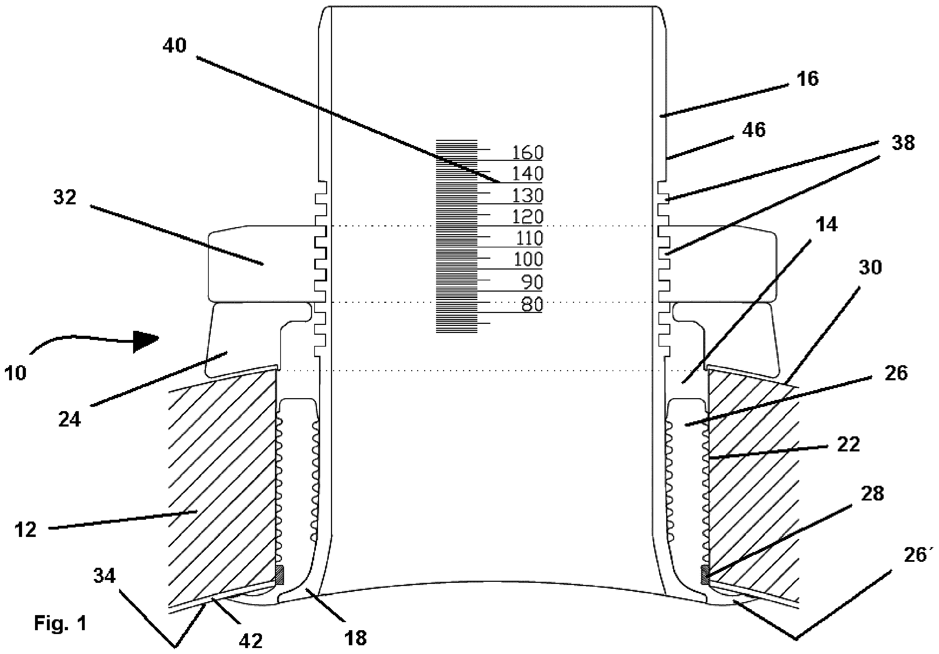

In Fig. 1 ist ein Anschlusssystem 10 in einer Querschnittansicht dargestellt.

Das Anschlusssystem 10 dient dazu, ein Hauptrohr 12 mit einem hier nicht gezeigten Rohr fluiddicht zu verbinden und so beispielweise den Anschluss an ein Haus herzustellen.

Hierzu ist in der Wandung des Hauptrohres 12 eine Abzweigöffnung 14 eingebracht.

In der Abzweigöffnung 14 des Hauptrohres 12 ist ein Innenrohr 16 positioniert, das eine Lasche 18 an dem Ende aufweist, das in das Lumen des Hauptrohres 12 hineinragt.

Zwischen der Hauptrohr-Leibungsfläche 22, die die Abzweigöffnung 14 begrenzt, und der Außenfläche 46 des Innenrohres 16 ist ein Dichtelement 26 positioniert, das im Verbindungszustand den Bereich zwischen Hauptrohr-Leibungsfläche 22 und Außenfläche 46 des Innenrohres 16 abdichtet. Das Dichtelement 26 weist an dem dem Lumen des Hauptrohres 12 zugewandten Ende eine Lippe 26' auf, die im Verbindungszustand durch die Lasche 18 des Innenrohres 16 auf die Hauptrohr-Innenfläche 34 gedrückt wird und hier abdichtend wirkt.

Das Dichtelement 26 wird durch eine konische Ausformung des Abschnitts des Innenrohres 16, der an die Lasche 18 angrenzt und von dem Dichtelement 26 umschlossen ist, im Verbindungszustand an die Hauptrohr-Leibungsfläche 22 gedrückt und wirkt dort abdichtend.

Die konische Ausformung ist dabei derart gestaltet, dass das Innenrohr in Richtung der Lasche sich in dem genannten Bereich kegelstumpfartig erweitert, so dass sich dort der Durchmesser des Innenrohres 16 stetig erweitert.

In Fig. 1 ist dargestellt, dass das Hauptrohr 12 durch einen Inliner 42 saniert ist.

Der Inliner 42 liegt dazu an der Hauptrohr-Innenfläche 34 des Hauptrohres 12 an.

Um zu verhindern, dass Feuchtigkeit in den Spalt zwischen Hauptrohr-Innenfläche 34 und Inliner 42 eindringt, ist das Dichtelement 26 derart ausgestaltet, dass die Lippe 26' das im Bereich der Abzweigöffnung 14 des Hauptrohres 12 zu liegen kommende Ende des Inliners 42 entsprechend abgedichtet.

Das Dichtelement 26 weist weiterhin einen Bereich 28 auf, in dem ein quellfähiges Material angeordnet ist.

Das quellfähige Material des Bereichs 28 des Dichtelements 26 vergrößert bei Zutritt von Feuchtigkeit sein Volumen und wirkt daher in ganz besonderem Maße dichtend. Der Bereich 28 des Dichtelements 26, der das quellfähige Material aufweist, ist derartig positioniert, dass dieser etwa am Ort des Spaltes zwischen Inliner 42 und Hauptrohr-Innenfläche 34 zum Liegen kommt und idealerweise diesen Ort noch breit überspannt.

Das Anschlusssystem 10 ist derart montiert, dass nach Positionierung des Innenrohres 16 mit dem Dichtelement 26 in der Abzweigöffnung 14 des Hauptrohres 12 ein Haltering 24 aufsetzbar ist, der sich auf der Hauptrohr-Außenfläche 30 abstützt und anschließend ein Schraubelement 32 anbringbar ist, das festzuziehen ist.

Das Schraubelement 32 ist mittels eines Gewindes 38 auf der Außenfläche 46 des Innenrohres 16 aufschraubbar.

Auf der Außenfläche 46 des Innenrohres 16 ist eine Skalierung 40 angebracht.

Der Aufschraubweg des Schraubelements 32 kann dann anhand der Skalierung 40 auf der Außenfläche 46 des Innenrohres 16 bestimmt werden.

Hierdurch wird durch die Schraubbewegung des Schraubelements 32 das Innenrohr 16 im vorgegebenen Maß soweit radial vom Hauptrohr 12 wegbewegt, dass das Dichtelement 26 und insbesondere die Lippe 26' durch die Lasche 18 des Innenrohres 16 entsprechend an die Hauptrohr-Innenfläche 34 bzw. die Hauptrohr-Leibungsfläche 22 angepresst wird.

Bei einer sachgerechten Installation des Anschlusssystems 10 ragt die Lasche 18 des Innenrohres 16 und die Lippe 26' des Dichtelements 26 nur in ganz geringem Maße in das Lumen des Hauptrohres 12, was vorteilhaft ist im Hinblick auf eine mögliche Beeinträchtigung des im Hauptrohr 12 stattfindenden Fluidflusses.

Am freien Ende des Innenrohres 16 kann dann ein weiteres Rohr - beispielweise unter Zwischenschaltung einer Doppelsteckmuffe - angeordnet werden, und so ein Hausanschluss geschaffen werden, was in der Fig. 1 nicht gezeigt ist.

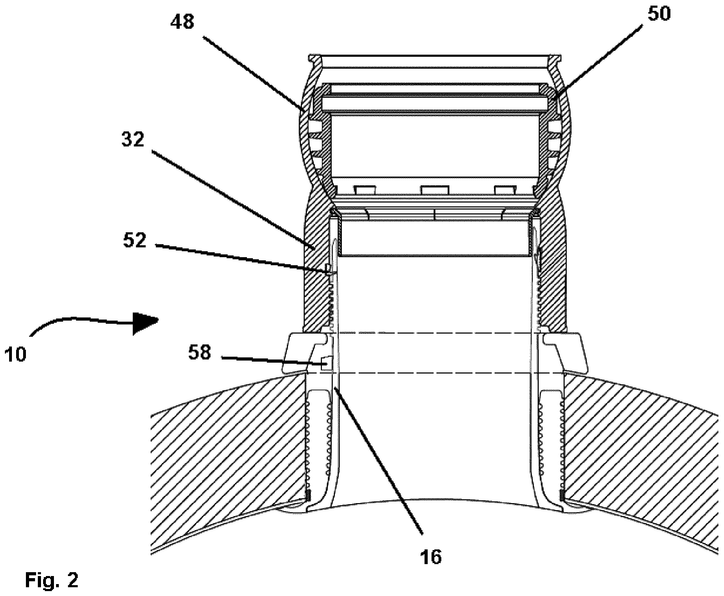

In Fig. 2 ist eine Querschnittdarstellung einer zweiten Ausführung gezeigt.

Die Bezugszeichen aller Figuren entsprechen einander.

In Fig. 2 ist gezeigt, dass das Schraubelement 32 derart gestaltet ist, dass es an seinem freien Ende, d. h. dem Ende, an dem ein Rohr anzuschließen ist, als Kugelgelenkaufnahme 48 ausgebildet ist.

In der Kugelgelenkaufnahme 48 des Schraubelements 32 ist ein Verbindungsstück 50 aufgenommen, in welches ein hier nicht gezeigtes Rohr einsteckbar ist. Auf diese Weise ist dann der Anschluss beispielsweise zu einem Haus möglich.

Das Verbindungsstück 50 in der Kugelgelenkaufnahme 48 des Schraubelements 32 ist so eingerichtet, dass dieses über einen bestimmten Winkel in alle Richtungen schwenkbar ist. Auf diese Weise ist eine vereinfachte Installation und Ausrichtung des Rohres möglich, das am Verbindungsstück 50 anzuschließen ist.

Das Anschlusssystem 10 selbst ist im Hinblick auf die Details analog aufgebaut wie bei Fig. 1.

Es ist weiterhin vorgesehen, dass das Innenrohr 16 an seiner Außenfläche 46 etwa im Bereich der Hauptrohr-Außenfläche 30 im Verbindungszustand einen vorzugsweise umlaufenden Anschlag 58 aufweist, der dazu geeignet ist, sicherzustellen, dass das Dichtelement 26 beim Einschieben in die Abzweigöffnung 14 des Hauptrohres 12 sich nicht unkontrolliert verschiebt, sondern im Wesentlichen am Ort verbleibt. Alternativ kann der Anschlag auch nur in Abschnitten um den Umfang der Außenfläche 46 des Innenrohres 16 ausgebildet sein. Dies erleichtert das Aufschieben des Dichtelements 26 auf das Innenrohr 16.

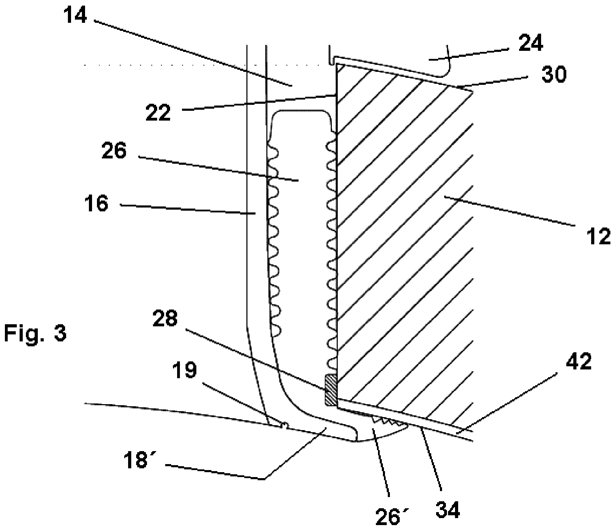

Fig. 3 zeigt eine Querschnittansicht eines Details des Anschlusssystems 10 gemäß der vorliegenden Erfindung.

Hierzu ist der Verbindungszustand gezeigt.

Das Hauptrohr 12 weist eine Abzweigöffnung 14 auf, die durch die Hauptrohr-Leibungsfläche 22 begrenzt wird.

In der Abzweigöffnung 14 ist ein Innenrohr 16 positioniert, welches Laschen 18' aufweist, die am Ende des Innenrohres 16 zum Lumen des Hauptrohres 12 hin angeordnet ist.

Die Laschen 18' sind nicht umlaufend um das Ende des Innenrohres 16, sondern in einzelnen Abschnitten, die vorzugsweise äquidistant zueinander beabstandet sind und untereinander gleiche Größe besitzen, ausgebildet.

An jeder Lasche 18' ist ein Gelenkabschnitt 19 ausgebildet, der derartig ausgeführt ist, dass die Lasche 18' bis zu einem gewissen Maß in Richtung auf das zweite freie Ende abwinkelbar ist, was das Einführen des Innenrohres 16 mit den Laschen 18' in die Abzweigöffnung 14 des Hauptrohres 12 erleichtert.

Beim Einführen werden dazu die Laschen 18' am Gelenkabschnitt 19 abgewinkelt, bis das Innenrohr 16 soweit in die Abzweigöffnung 14 eingeführt ist, dass die Laschen 18' zurüccklappen können. Dazu ist der Gelenkabschnitt 19 derart gestaltet, dass die Laschen 18' in eine stabile Lage zurückkehren, die der Einbausituation entspricht, sobald keine Kraft mehr auf die Laschen 18' ausgeübt wird.

Durch diese Ausgestaltung der Erfindung ist es möglich, dass nach Installation des Anschlusssystems 10 die Laschen 18' die Lippe 26' des Dichtelements 26 besser an die Hauptrohr-Innenfläche 34 bzw. die Oberfläche des mit Hilfe eines Inliners 42 sanierten Hauptrohres 12 drücken.

Hierdurch wird eine verbesserte Dichtheit des Anschlussystems 10 erreicht.

Der Bereich 28 des Dichtelements 26 weist ein quellfähiges Material auf, das bei Zutritt von Feuchtigkeit sein Volumen vergrößert und verbessert dichtend wirkt.
Der Bereich 28 des Dichtelements 26 ist in der Fig. 3 derartig positioniert, dass er im Verbindungszustand den Bereich zwischen Inliner 42 und Hauptrohr-Innenfläche 34 bedeckt und den dort ggf. entstehenden Spalt sicher überbrückt.
Hierdurch kann wirksam verhindert werden, dass Feuchtigkeit in den Spalt zwischen Inliner 42 und Hauptrohr-Innenfläche 34 eindringt.

Das Dichtelement 26 ist in seiner Kontur so gestaltet, dass es eine gewellte Oberfläche in den Abschnitten aufweist, die in Richtung der Hauptrohr-Leibungsfläche 22 und der Außenfläche 46 des Innenrohres 16 orientiert sind.
Im Verbindungszustand bewirkt diese gewellte Oberfläche des Dichtelements 26 eine ganz besondere Dichtheit des Anschlusssystems 10.

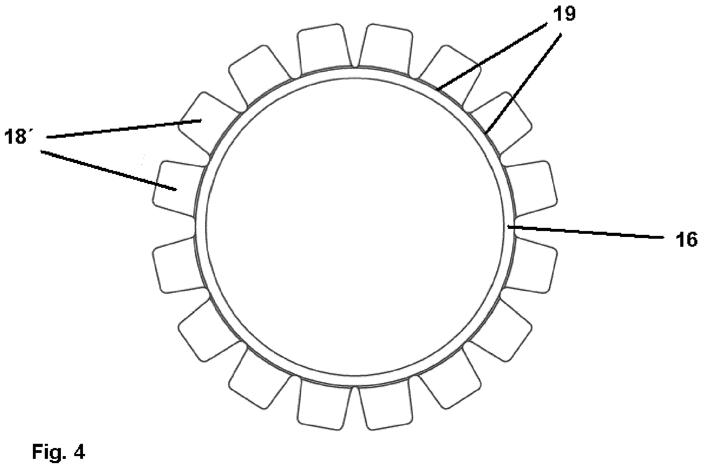

In Fig. 4 ist eine Aufsicht auf das Innenrohr 16 dargestellt.

Gezeigt ist hier die Ausführung, die zu Fig. 3 korrespondiert.

Das Innenrohr 16 weist Laschen 18' auf, die in etwa gleiche Größe und gleiche Beabstandung zueinander aufweisen.

Die Anzahl der Laschen 18' ist in der Fig. 16. Es kann auch eine andere Anzahl von Laschen 18' ausgebildet sein.

Die Laschen 18' sind über einen Gelenkabschnitt 19 mit dem Innenrohr 16 verbunden und können gekippt werden, wobei die Laschen 18' dann winkelig zur Achse des Innenrohres 16 in Richtung des anderen Endes wegstehen.

Es ist erfindungsgemäß günstig, wenn der Gelenkabschnitt 19 so ausgeführt ist, dass die Laschen 18' nach dem Kippen wieder in ihren Ausgangszustand zurückkehren.

Diese kippbare Konstruktion der Laschen 18' erleichtert das Einführen des Innenrohres 16 in die Abzweigöffnung 14 des Hauptrohres 12.

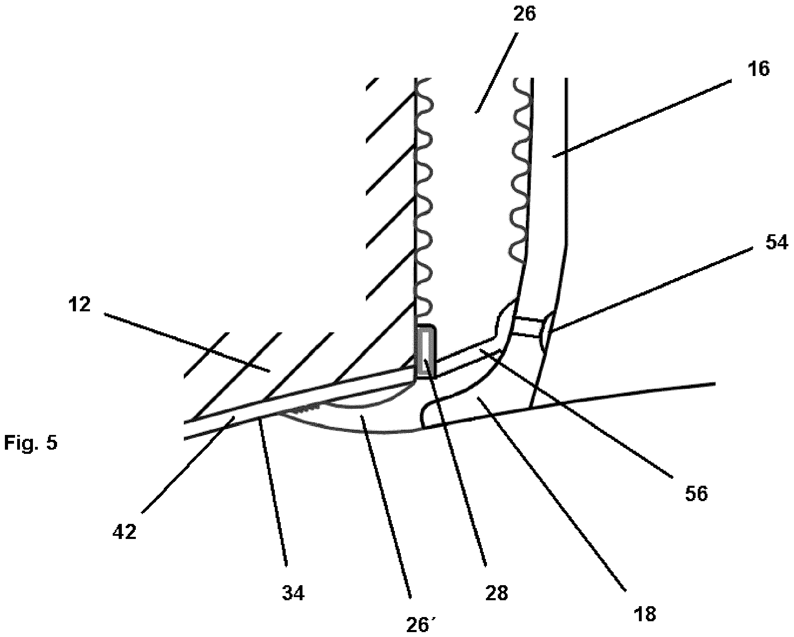

In Fig. 5 ist in einer Querschnittdarstellung ein Detail des Anschlusssystems 10 nach einem weiteren Ausführungsbeispiel gezeigt.

Hierzu ist am Innenrohr 16 auf der Innenoberfläche ein markierter Ort, beispielhaft in der

Fig. eine Vertiefung 54 angebracht, die nahe zur Lasche 18 ausgebildet ist.

Das Dichtelement 26 ist modifiziert, indem dieses einen Kanal 56 aufweist, der im Verbindungszustand an der Außenfläche 46 der Vertiefung 54 des Innenrohres 16 gegenüberliegend anliegt und bis zum Bereich 28 reicht, an dem im Dichtelement 26 das quellfähige Material angeordnet ist.

Die Wandung des Innenrohres 16 kann im Bereich der Vertiefung 54 durchstoßen werden, indem diese beispielsweise gebrochen oder gebohrt oder gefräst wird, um dadurch eine Öffnung zu erzeugen, so dass der Kanal 56 zugänglich ist.

In den Kanal 56 kann dann ein Mittel eingebracht werden, beispielsweise eine Verpressmasse oder eine Dichtungsmasse, um im Bereich 28 dann eine verbesserte Dichtheit herzustellen.

Das im Bereich 28 angeordnete quellfähige Material ist hierzu so gestaltet, dass ein Freiraum bleibt, um das Mittel einzubringen.

Dazu kann das quellfähige Material beispielsweise in Form eines Ziehharmonikabalgens ausgebildet sein, so dass das Mittel sich in den Vertiefungen des Balgens ausbreiten kann. Es entfaltet seine Dichtwirkung dann durch Bedecken der Hauptrohr-Leibungsfläche 22 und / oder der Hauptrohr-Innenfläche 34 bzw. des Inliners 42.

Hierbei resultiert eine besonders hohe Dichtheit des Anschlusssystems 10.

Die weiteren Ausführungen des Anschlusssystems 10 sind in dieser Figur identisch zur

Fig. 1, Bezugszeichen entsprechen einander.

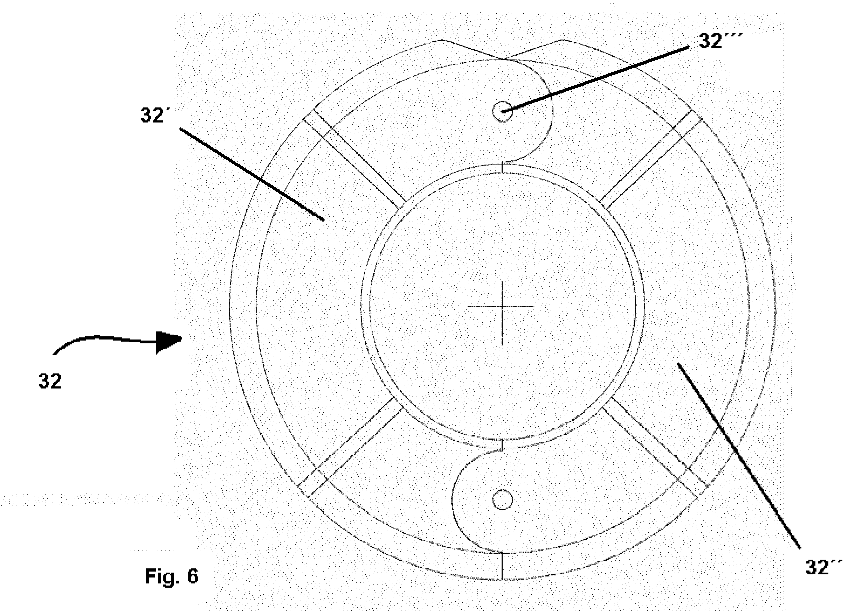

In Fig. 6 ist eine Aufsicht auf das Schraubelement 32 gezeigt.

Das Schraubelement 32 ist aus zwei Abschnitten 32' und 32" zusammensetzbar.

Das Zusammensetzen erfolgt mit Hilfe eines Verbindungselements 32"'.

Das Verbindungselement 32'" kann eine Achselement sein, das in Durchbrüche in den Abschnitten 32'und 32" einsteckbar ist.

Damit ist eine platzsparende Lagerung möglich, für den Gebrauchsfall ist das Schraubelement 32 dann sofort montierbar und steht zur Verfügung.

### Bezugszeichen

- 10: Anschlusssystem
- 12: Hauptrohr
- 14: Abzweigöffnung
- 16: Innenrohr
- 18: Lasche
- 18': Lasche
- 19: Gelenkabschnitt
- 22: Hauptrohr-Leibungsfläche
- 24: Haltering
- 26: Dichtelement
- 26': Lippe
- 28: Bereich
- 30: Hauptrohr-Außenfläche
- 32: Schraubelement
- 32', 32": Abschnitt
- 32'": Verbindungselement
- 34: Hauptrohr-Innenfläche
- 38: Gewinde
- 40: Skalierung
- 42: Inliner
- 46: Außenfläche
- 48: Kugelgelenk-Aufnahme
- 50: Verbindungsstück
- 52: Dichtung
- 54: Vertiefung
- 56: Kanal
- 58: Anschlag

## Patentansprüche

1. Anschlusssystem (10) zum Anschließen eines Rohres an ein Hauptrohr (12), wobei das Anschlusssystem (10) zu diesem Zweck mit dem Hauptrohr (12) verbindbar ist, mit
einem elastisch verformbaren Innenrohr (16), wobei das Innenrohr (16) einen Endabschnitt mit wenigstens einer abgeknickten Lasche (18) aufweist und durch Zusammendrücken mit der Lasche (18) voran durch eine Abzweigöffnung (14) des Hauptrohres (12) in dieses teilweise einschiebbar ist,
einem Haltering (24) und einem Dichtelement (26), wobei der Haltering (24) und das Dichtelement (26) im Verbindungszustand auf das Innenrohr (16) aufgeschoben sind, und wobei das Dichtelement (26) im Verbindungszustand mit einer anliegenden Kontakt-fläche wenigstens teilweise an eine Hauptrohr-Leibungsfläche (22), die die Abzweigöffnung (14) begrenzt und diese umgibt, und an eine Hauptrohr-Innenfläche (34), die die Abzweigöffnung (14) umgrenzt, drücken kann,
einem Schraubelement (32), wobei das Schraubelement (32) im Verbindungszustand auf das Innenrohr (16) geschraubt ist und dabei den Haltering (24) gegen eine Hauptrohr-Außenfläche (30) drücken kann,
**dadurch gekennzeichnet,**
**dass** die Lasche (18) als in Abschnitten ausgebildeter Bund (18') mit einem Gelenkabschnitt (19) ausgebildet ist.

2. Anschlusssystem (10) nach Anspruch 1, **dadurch gekennzeichnet, dass** das Schraubelement (32) über ein an einer Außenfläche (46) des Innenrohres (16) ausgebildetes Gewinde (38) auf das Innenrohr (16) geschraubt ist.

3. Anschlusssystem (10) nach einem der vorangehenden Ansprüche, **dadurch gekennzeichnet, dass** das Dichtelement (26) geführt und drehfest in Bezug auf das Innenrohr (16) auf dieses aufschiebbar ist.

4. Anschlusssystem (10) nach einem der vorangehenden Ansprüche, **dadurch gekennzeichnet, dass** der Haltering (24) geführt und drehfest in Bezug auf das Innenrohr (16) auf dieses aufschiebbar ist.

5. Anschlusssystem (10) nach einem der vorangehenden Ansprüche, **dadurch gekennzeichnet, dass** das Innenrohr (16) eine Skalierung (40) aufweist, die den Aufschraubweg des Schraubelements (32) anzeigt.

6. Anschlusssystem (10) nach einem der vorangehenden Ansprüche, **dadurch gekennzeichnet, dass** das Dichtelement (26) wenigstens einen Bereich (28) aus einem quellfähigen Material aufweist, der im Verbindungszustand vorzugsweise einen Kontakt zu der Hauptrohr-Leibungsfläche (22) und / oder zu der Hauptrohr-Innenfläche (34) aufweisen kann.

7. Anschlusssystem (10) nach einem der vorangehenden Ansprüche, **dadurch gekennzeichnet, dass** am Innenrohr (16) ein markierter Ort, bevorzugt eine Vertiefung (54), ausgebildet ist, der im Verbindungszustand in etwa in Höhe des Bereiches (28) aus einem quellfähigen Material des Dichtelements (26) ausgebildet ist, hinter dem ein Kanal (56) angeordnet ist, in den nach Öffnung des markierten Ortes ein Mittel einbringbar ist.

8. Anschlusssystem (10) nach einem der vorangehenden Ansprüche, **dadurch gekennzeichnet, dass** das Schraubelement (32) aus zwei Abschnitten (32', 32") zusammensetzbar ausgeführt ist.

9. Rohrsystem mit wenigstens einem Anschlusssystem (10) nach einem der Ansprüche 1 bis 8.

## Claims

1. Connection system (10) for connecting a pipe to a main pipe (12), wherein the connection system (10) is connectable for this purpose to the main pipe (12), comprising:
an elastically deformable inner pipe (16), wherein the inner pipe (16) has an end portion with at least one bent tab (18) and can be inserted by compression with the tab (18) forward through a branch aperture (14) of the main pipe (12) partially into the latter,
a retaining ring (24) and a sealing element (26), wherein in the connection state the retaining ring (24) and the sealing element (26) are slid onto the inner pipe (16), and
wherein in the connection state the sealing element (26) can press with a close-fitting contact surface at least partially on a main pipe reveal surface (22), which delimits the branch aperture (14) and encloses this, and on a main pipe internal surface (34),
which surrounds the branch aperture (14),
a screw element (32), wherein the screw element (32) is screwed in the connection state onto the inner pipe (16) and can press the retaining ring (24) against a main pipe external surface (30),
**characterised in that**
the tab (18) is formed as a collar (18') formed in sections having an articulated portion (19).

2. Connection system (10) according to claim 1, **characterised in that** the screw element (32) is screwed onto the inner pipe (16) by way of a thread (38) formed on an external surface (46) of the inner pipe (16).

3. Connection system (10) according to one of the preceding claims, **characterised in that** the sealing element (26) can be slid onto the inner pipe (16) in a manner to be guided and fixed in rotation relative to said inner pipe.

4. Connection system (10) according to any one of the preceding claims, **characterised in that** the retaining ring (24) can be slid onto the inner pipe (16) in a manner to be guided and fixed in rotation relative to said inner pipe.

5. Connection system (10) according to any one of the preceding claims, **characterised in that** the inner pipe (16) has a scale (40), which indicates the screw-on path of the screw element (32).

6. Connection system (10) according to any one of the preceding claims, **characterised in that** the sealing element (26) has at least one region (28) of an expandable material that in the connection state may preferably have contact with the main pipe reveal surface (22) and / or with the main pipe internal surface (34).

7. Connection system (10) according to any one of the preceding claims, **characterised in that** there is formed on the inner pipe (16) a marked location, preferably a recess (54), which is formed at roughly the level of the region (28) of an expandable material of the sealing element (26) in the connection state and behind which a duct (56) is arranged, into which a medium can be introduced following opening of the marked location.

8. Connection system (10) according to any one of the preceding claims, **characterised in that** the screw element (32) is executed to be assemblable from two portions (32', 32").

9. Pipe system with at least one connection system (10) according to any one of claims 1 to 8.

## Revendications

1. Système de raccordement (10) destiné à raccorder un tuyau à un tuyau principal (12), le système de raccordement (10) pouvant être relié au tuyau principal (12) à cet effet, comprenant
un tuyau intérieur (16) déformable élastiquement, le tuyau intérieur (16) comportant une partie d'extrémité dotée d'au moins une languette (18) pliée, et pouvant être inséré en partie dans le tuyau principal (12) par une ouverture d'embranchement (14) de celui-ci par compression avec la languette (18) en tête,
une bague de maintien (24) et un élément d'étanchéité (26), la bague de maintien (24) et l'élément d'étanchéité (26) étant emboîtés sur le tuyau intérieur (16) dans l'état relié, et l'élément d'étanchéité (26), dans l'état relié, pouvant appuyer avec une surface de contact adjacente au moins en partie sur une surface d'intrados de tuyau principal (22), qui limite l'ouverture d'embranchement (14) et entoure celle-ci, et sur une surface intérieure de tuyau principal (34), qui délimite l'ouverture d'embranchement (14),
un élément à visser (32), l'élément à visser (32) étant, dans l'état relié, vissé sur le tuyau intérieur (16) et pouvant alors presser la bague de maintien (24) contre une surface extérieure (30) du tuyau principal,
**caractérisé en ce que**
la languette (18) est réalisée sous la forme d'un collet (18') réalisé en segments avec une partie d'articulation (19).

2. Système de raccordement (10) selon la revendication 1, **caractérisé en ce que** l'élément à visser (32) est vissé sur le tuyau intérieur (16) par le biais d'un filetage (38) réalisé sur une surface extérieure (46) du tuyau intérieur (16).

3. Système de raccordement (10) selon l'une des revendications précédentes,
**caractérisé en ce que** l'élément d'étanchéité (26) peut être glissé sur le tuyau intérieur (16) de manière guidée et solidaire en rotation par rapport à celui-ci.

4. Système de raccordement (10) selon l'une des revendications précédentes,
**caractérisé en ce que** la bague de maintien (24) peut être glissée sur le tuyau intérieur (16) de manière guidée et solidaire en rotation par rapport à celui-ci.

5. Système de raccordement (10) selon l'une des revendications précédentes,
**caractérisé en ce que** le tuyau intérieur (16) comporte une échelle (40), qui indique la course de vissage de l'élément à visser (32).

6. Système de raccordement (10) selon l'une des revendications précédentes,
**caractérisé en ce que** l'élément d'étanchéité (26) comporte au moins une zone (28) en un matériau gonflable, qui peut comporter, dans l'état relié, de préférence un contact avec la surface d'intrados de tuyau principal (22) et/ou la surface intérieure de tuyau principal (34).

7. Système de raccordement (10) selon l'une des revendications précédentes,
**caractérisé en ce qu'**un endroit marqué, de préférence un creux (54), est réalisé sur le tuyau intérieur (16), qui est réalisé, dans l'état relié, approximativement à la hauteur de la zone (28) en un matériau apte au gonflement de l'élément d'étanchéité (26) et derrière lequel est disposé un conduit (56), dans lequel un milieu peut être introduit après l'ouverture de l'endroit marqué.

8. Système de raccordement (10) selon l'une des revendications précédentes,
**caractérisé en ce que** l'élément à visser (32) est conçu de manière apte à être assemblé à partir de deux parties (32', 32").

9. Système de tuyaux comprenant au moins un système de raccordement (10) selon l'une des revendications 1 à 8.
